# EUROPÄISCHE PATENTSCHRIFT

(11) **EP 1 687 887 B1**
(45) Veröffentlichungstag und Bekanntmachung des Hinweises auf die Patenterteilung: **06.08.2008**
(21) Anmeldenummer: 04797639.4
(22) Anmeldetag: 05.11.2004
(51) Int. Cl.: H02K 33/16, H02K 33/18

(54) **ELEKTROMOTOR FÜR EIN ELEKTRISCHES KLEINGERÄT**
ELECTRIC MOTOR FOR AN ELECTRICAL SMALL-SCALE UNIT
MOTEUR ELECTRIQUE POUR PETIT APPAREIL ELECTRIQUE

(30) Priorität: 27.11.2003 DE 10355446
(43) Veröffentlichungstag der Anmeldung: 09.08.2006
(73) Patentinhaber: Braun GmbH, 61476 Kronberg (DE)
(72) Erfinder: KRAUS, Bernhard, 35618 Braunfels (DE); REICK, Hansjörg, 61449 Steinbach (DE); SCHOBER, Uwe, 61479 Glashütten-Schlossborn (DE); SCHRÖTER, Alexander, 65760 Eschborn (DE)
(86) Internationale Anmeldenummer: PCT/EP2004/012522
(87) Internationale Veröffentlichungsnummer: WO 2005/062445

(56) Entgegenhaltungen:
- WO-A1-20/04047670
- WO-A1-20/04049547
- DE-A1- 1 463 988
- DE-A1- 2 236 276
- US-A- 5 263 218
- US-A1- 2001 043 016
- US-A1- 2002 163 701

## Beschreibung

Die Erfindung bezieht sich auf einen Elektromotor für ein elektrisches Kleingerät. Weiterhin bezieht sich die Erfindung auf ein elektrisches Kleingerät mit einem derartigen Elektromotor.

Elektromotoren für elektrische Kleingeräte sind bereits in vielfältiger Ausführung bekannt. So offenbart die DE 1 151 307 A einen Schwingankerantrieb für Trockenrasiergeräte mit hin- und hergehender Arbeitsbewegung eines Schermessers, der einen mit dem Gehäuse des Rasiergeräts fest verbundenen und U-förmig ausgebildeten Elektromagneten aufweist. In der Nähe der Pole des Elektromagneten sind ein Arbeitsanker und beiderseits des Arbeitsankers je ein Ausgleichsanker schwingfähig angeordnet. Im Betriebszustand schwingt der Arbeitsanker, der ein Schermesser antreibt, parallel zu den Polflächen des Elektromagneten, wobei die Ausgleichsanker eine dazu gegenphasige Schwingbewegung ausführen, um eine Übertragung der Schwingungen des Arbeitsankers auf das Gehäuse des Rasiergeräts möglichst zu verhindern.

Weiterhin ist aus der US 5 632 087 ein Trockenrasierer mit einem Linearmotor bekannt. Der Linearmotor weist eine Statorspule und mehrere mit Dauermagneten bestückte Läufer auf, die durch die Statorspule in lineare Schwingungsbewegungen versetzt werden. Die Auslenkungen der Läufer werden mit Hilfe von den Läufern zugeordneten Detektoren erfaßt und in Form eines Mittelwerts weiterverarbeitet. Dabei wird die Stromversorgung der Statorspule abhängig von dem Mittelwert so gesteuert, daß die Schwingungsamplituden sämtlicher Läufer möglichst konstant gehalten werden. Die Detektoren bestehen jeweils aus einem am jeweiligen Läufer angeordneten Dauermagneten und einer ortsfest montierten Sensorspule, in der durch Einwirkung des Dauermagneten eine von der Geschwindigkeit des jeweiligen Läufers abhängige Induktionsspannung generiert wird.

Aus der EP 1 193 844 A1 ist ein linearer Oszillator bekannt, bei dem in einem als ein Stator ausgebildeten Gehäuse ein Läufer angeordnet ist, der eine hin- und hergehende Bewegung ausführt. In dem Gehäuse ist weiterhin eine Spindel zur Steuerung der Schwingungsamplitude des Läufers beweglich angeordnet. Der Läufer und die Spindel sind mittels Federn untereinander und mit dem Gehäuse gekoppelt. Die Kopplung des Läufers mit dem Gehäuse kann insbesondere mittels einer Schraubenfeder erfolgen, wobei ein Ende der Schraubenfeder am Gehäuse und das andere Ende am Läufer befestigt ist. Bei dieser Anordnung übt die Feder beim Stauchen und Strecken nicht nur eine Kraft in Axialrichtung aus, sondern verdreht den Läufer jeweils geringfügig, so daß eine oszillierende Drehbewegung entsteht, insbesondere, wenn die Anregung mit der Resonanzfrequenz der oszillierenden Drehbewegung erfolgt.

Mit den bekannten Anordnungen werden zunächst ausschließlich lineare Schwingungsbewegungen erzeugt. Gemäß der EP 1 193 844 A1 besteht dabei zusätzlich die Möglichkeit, aus der linearen Schwingungsbewegung mittels einer Feder zusätzlich eine oszillierende Drehbewegung zu erzeugen. Allerdings ist die so erzeugte oszillierende Drehbewegung mit der linearen Schwingungsbewegung gekoppelt und setzt zwingend voraus, daß die lineare Schwingungsbewegung angeregt wird. Außerdem weist die oszillierende Drehbewegung stets die gleiche Frequenz wie die lineare Schwingungsbewegung auf, so daß die Variationsmöglichkeiten sehr begrenzt sind.

Aus der WO 2004/047670 A1, der WO 2004/049547 A1 sowie der US 2002/163701 A1 und US 2001/043016 A1 sind weitere elektrische Antriebe bekannt. Davon zeigt die US 2002/163701 A1 eine Antriebseinrichtung für das Verstellen eines Spiegels, der auf einer Längsachse des Antriebes befestigt ist. Diese Längsachse kann zum einen um ihre Mittelachse gedreht werden, darüber hinaus ist diese Achse auch noch um ihre dem Spiegel gegenüberliegende Auflage verschwenkbar. Aus der US 2001/043016 A1 ist ein Linearmotor bekannt, der zum einen permanent um seine Längsachse rotierend angetrieben werden kann, und dessen Rotor zusätzlich axial verschiebbar ist.

Der Erfindung liegt die Aufgabe zugrunde, einen Elektromotor für ein elektrisches Kleingerät möglichst optimal auszubilden.

Diese Aufgabe wird durch die Merkmalskombination des Anspruchs 1 gelöst.

Der erfindungsgemäße Elektromotor für ein elektrisches Kleingerät weist wenigstens eine schwingungsfähige Motorkomponente und eine Magnetanordnung mit wenigstens einem Permanentmagneten auf. Weiterhin weist der erfindungsgemäße Elektromotor eine Spule zur Erzeugung eines Magnetfelds auf, das in Wechselwirkung mit der Magnetanordnung eine Kraft zur Anregung einer linearen Schwingungsbewegung erzeugt. Die Besonderheit des erfindungsgemäßen Elektromotors besteht darin, daß bei der Wechselwirkung des von der Spule erzeugten Magnetfelds und der Magnetanordnung zusätzlich ein Drehmoment zur Anregung einer rotatorischen Schwingungsbewegung erzeugt wird. Jede der Bewegungen kann auch isoliert von den anderen Bewegungen einzeln separat erzeugt werden.

Die Erfindung hat den Vorteil, daß vom gleichen Motor sowohl eine lineare als auch eine rotatorische Schwingungsbewegung erzeugt wird und dazu kein Getriebe erforderlich ist. Ein weiterer Vorteil besteht darin, daß der erfindungsgemäße Elektromotor sehr einfach aufgebaut ist. Zudem ist es von Vorteil, daß vergleichsweise hohe Schwingungsfrequenzen erreichbar sind, nur geringe Gehäusevibrationen entstehen und ein sehr leiser Betrieb möglich ist.

Die lineare Schwingungsbewegung ist vorzugsweise parallel und/oder senkrecht zur Drehachse der rotatorischen Schwingungsbewegung orientiert. Für ein derartiges Bewegungsmuster gibt es eine große Zahl von Anwendungsfällen.

Der erfindungsgemäße Elektromotor kann so ausgebildet sein, daß dieselbe Motorkomponente mehrere unterschiedliche Schwingungsbewegungen ausführt. Ebenso ist es auch möglich, daß mehrere Motorkomponenten je wenigstens eine Schwingungsbewegung ausführen. Dabei können die Motorkomponenten insbesondere unterschiedliche Schwingungsbewegungen ausführen. Es kann eine Motorkomponente eine lineare Schwingungsbewegung und eine weitere Motorkomponente eine rotatorische Schwingungsbewegung ausführen.

In einem bevorzugten Ausführungsbeispiel der Erfindung wird von je einem Satz von Permanentmagneten je eine Art von Schwingungsbewegungen angeregt. Dabei können mehrere Funktionssegmente axial nebeneinander angeordnet sein, wobei jedes Funktionssegment je einen Satz von Permanentmagneten aufweist. Es kann wenigstens ein in einem axialen Endbereich angeordnetes äußeres Funktionssegment mit einem Satz von Permanentmagneten zur Anregung einer linearen Schwingungsbewegung vorgesehen sein. Weiterhin kann wenigstens ein axial zwischen zwei äußeren Funktionssegmenten angeordnetes inneres Funktionssegment mit einem Satz von Permanentmagneten zur Anregung einer rotatorischen Schwingungsbewegung vorgesehen sein.

Als schwingungsfähige Motorkomponenten können ein Läufer und ein Stator vorgesehen sein. In diesem Fall ist der Stator nicht ortsfest angeordnet, sondern ebenso wie der Läufer beweglich aufgehängt. Die schwingungsfähigen Motorkomponenten können zueinander gegenphasige Schwingungsbewegungen ausführen. Durch den so erzielten Kompensationseffekt können die Gehäuseschwingungen sehr gering gehalten werden. Ebenso kann auch wenigstens eine Ausgleichsmasse vorgesehen sein, die über wenigstens ein elastisches Element mit einer schwingungsfähigen Motorkomponente gekoppelt ist. In diesem Fall kann eine Unterdrückung von Gehäuseschwingungen dadurch erreicht werden, daß die Ausgleichsmasse gegenphasig zur zugehörigen schwingungsfähigen Motorkomponente schwingt. Besonders vorteilhaft ist es, wenn mehrere schwingungsfähige Motorkomponenten mit unterschiedlichen Resonanzfrequenzen vorgesehen sind. Dadurch wird eine individuelle Steuerung der einzelnen schwingungsfähigen Motorkomponenten ermöglicht, obwohl nur eine einzige Spule für die Anregung der schwingungsfähigen Motorkomponenten vorhanden ist. Weiterhin ist es von Vorteil, wenn die Bewegung wenigstens einer schwingungsfähigen Motorkomponente über ein elastisches Element abgreifbar ist. Auf diese Weise ist es möglich, eine Übersetzung oder Untersetzung der Schwingungsbewegung ohne ein mechanisches Getriebe zu realisieren.

Um das von der Spule erzeugte Magnetfeld möglichst optimal mit der Magnetanordnung in Wechselwirkung zu bringen hat wenigstens partiell innerhalb der Spule ein magnetisierbares Material zur jeweils temporären Magnetisierung durch das Magnetfeld der Spule angeordnet sein.

Die Erfindung betrifft weiterhin ein elektrisches Kleingerät, das mit dem erfindungsgemäßen Elektromotor ausgerüstet ist. Das erfindungsgemäße Kleingerät kann beispielsweise als eine elektrische Zahnbürste oder als ein elektrischer Rasierapparat ausgebildet sein.

Die Erfindung wird nachstehend anhand der in der Zeichnung dargestellten Ausführungsbeispiele näher erläutert, die sich insbesondere auf den Einsatz des erfindungsgemäßen Elektromotors bei einer elektrischen Zahnbürste beziehen.

Es zeigen:
- Fig. 1: ein Ausführungsbeispiel des erfindungsgemäßen Elektromotors in einer Prinzipdarstellung,
- Fig. 2: das in Fig. 1 dargestellte Ausführungsbeispiel des erfindungsgemäßen Elektromotors in einer schematischen Schnittdarstellung, wobei der Schnitt durch eines der inneren Segmente des Stators verläuft,
- Fig. 3: das in Fig. 1 dargestellte Ausführungsbeispiel des erfindungsgemäßen Elektromotors in einer schematischen Schnittdarstellung, wobei der Schnitt durch eines der äußeren Segmente des Stators verläuft,
- Fig. 4: ein weiteres Ausführungsbeispiel des erfindungsgemäßen Elektromotors in einer schematischen Schnittdarstellung,
- Fig. 5: eine schematische Darstellung einer möglichen Ausbildung des Feder-Masse-Systems für das in den Fig. 1, 2 und 3 dargestellte Ausführungsbeispiel des erfindungsgemäßen Elektromotors,
- Fig. 6: eine schematische Darstellung einer Abwandlung des Feder-Masse-Systems,
- Fig. 7: eine schematische Darstellung einer weiteren Abwandlung des Feder-Masse-Systems,
- Fig. 8: eine schematische Darstellung einer nochmaligen Abwandlung des Feder-Masse-Systems,
- Fig. 9: eine schematische Darstellung eines weiteren Ausführungsbeispiels für das Feder-Masse-System,
- Fig. 10: eine schematische Darstellung eines nochmals andersartigen Ausführungsbeispiels für das Feder-Masse-System und
- Fig. 11: ein weiteres Ausführungsbeispiel.

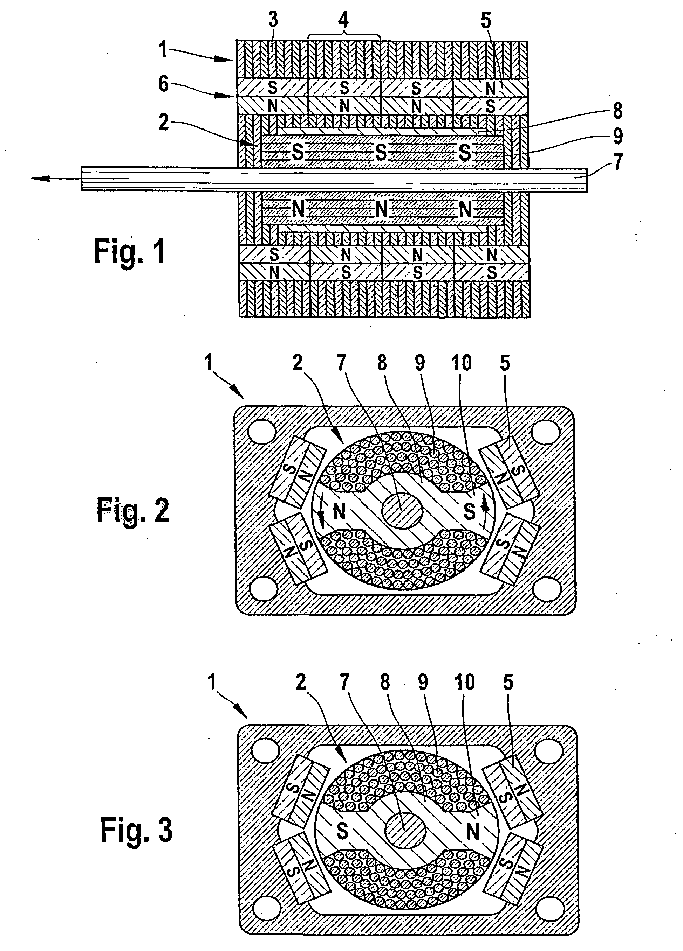

Fig. 1 zeigt ein Ausführungsbeispiel des erfindungsgemäßen Elektromotors in einer Prinzipdarstellung. Der Elektromotor weist einen Stator 1 und einen relativ zum Stator 1 verdrehbaren und parallel zur Drehachse verschiebbaren Läufer 2 auf. Der Stator 1 ist aus einem Stapel von Weicheisenblechen 3 zusammengesetzt, durch die vier axial nebeneinander angeordnete Segmente 4 ausgebildet werden. Jedes Segment 4 verfügt über einen Satz von mehreren über den Umfang des Stators 1 verteilte Permanentmagneten 5, die zusammen eine Magnetanordnung 6 des Stators 1 ausbilden. Der Läufer 2 weist einen auf einer Welle 7 angeordneten Eisenkern 8 mit einer Spule 9 auf und kann sowohl lineare als auch rotatorische Schwingungsbewegungen relativ zum Stator 1 ausführen. Zur Anregung dieser Schwingungsbewegungen wird der Spule 9 ein Stromsignal zugeführt. Durch den Stromfluß durch die Spule 9 wird insbesondere im Bereich des Eisenkerns 8 ein Magnetfeld ausgebildet und der Eisenkern 8 dadurch temporär magnetisiert. Aus der magnetischen Wechselwirkung zwischen dem magnetisierten Eisenkern 8 und den Permanentmagneten 5 resultieren Kräfte und Drehmomente, deren Richtungen von der Anordnung der Permanentmagnete 5 relativ zum magnetisierten Eisenkern 8 abhängen. Beim vorliegenden Ausführungsbeispiel wird durch die Wechselwirkung zwischen dem magnetisierten Eisenkern 8 und den Permanentmagneten 5 der beiden inneren Segmente 4 des Stators 1 jeweils ein Drehmoment in gleicher Richtung erzeugt und durch die Wechselwirkung zwischen dem magnetisierten Eisenkern 8 und den Permanentmagneten 5 der beiden äußeren Segmente 4 jeweils eine Kraft in Axialrichtung. Durch die Einwirkung dieser Drehmomente und Kräfte wird der Läufer 2 sowohl rotatorisch als auch in Axialrichtung angetrieben. Einzelheiten zur Erzeugung dieser Antriebsbewegungen werden anhand der Fig. 2 und 3 erläutert.

Fig. 2 zeigt das in Fig. 1 dargestellte Ausführungsbeispiel des erfindungsgemäßen Elektromotors in einer schematischen Schnittdarstellung, wobei der Schnitt durch eines der inneren Segmente 4 des Stators 1 verläuft. Aus Fig. 2 geht hervor, daß der Eisenkern 8 zwei radiale Fortsätze 10 aufweist, die einander diametral gegenüberliegen und in deren Bereich durch die temporäre Magnetisierung des Eisenkerns 8 Magnetpole ausgebildet werden. Den radialen Fortsätzen 10 des Eisenkerns 8 radial benachbart sind die an den inneren Segmenten 4 des Stators 1 befestigten Permanentmagnete 5 angeordnet. Dabei sind je zwei Permanentmagnete 5 mit umgekehrter Polung in Umfangsrichtung nebeneinander positioniert. Die Positionierung der Permanentmagnete 5 relativ zum benachbarten radialen Fortsatz 10 des Eisenkerns 8 ist für beide radiale Fortsätze 10 identisch, so daß die Permanentmagnete 5 bezüglich der zwischen den beiden radialen Fortsätzen 10 verlaufenden Mittelebene spiegelbildlich angeordnet sind.

Bezüglich der Ausbildung des Magnetfelds der Spule 9 und damit der Magnetisierung des Eisenkerns 8 sowie bezüglich der Drehposition des Läufers 2 relativ zum Stator 1 stellt Fig. 2 eine Momentaufnahme dar. Zu dem dargestellten Zeitpunkt wird durch die anziehende Wirkung zwischen den ungleichnamigen Polen der Permanentmagnete 5 und des magnetisierten Eisenkerns 8 sowie durch die abstoßende Wirkung zwischen den gleichnamigen Polen ein resultierendes Drehmoment ausgebildet, das den Läufer 2 relativ zum Stator 1 entgegen dem Uhrzeigersinn antreibt. Bei einer Umkehrung des Stromflusses durch die Spule 9 wird das Magnetfeld der Spule 9 und damit auch die Magnetisierung des Eisenkerns 8 umgepolt und dadurch ein resultierendes Drehmoment in entgegengesetzter Richtung erzeugt, das den Läufer 2 relativ zum Stator 1 im Uhrzeigersinn antreibt. Bei einer fortwährenden Umkehrung des Stromflusses durch die Spule 9 wird auch die Drehrichtung des Läufers 2 fortwährend umgekehrt, so daß der Läufer 2 eine rotatorische Schwingungsbewegung relativ zum Stator 1 ausführt. Aus Fig. 1 geht hervor, daß die axial benachbarten Permanentmagnete 5 der beiden inneren Segmente 4 des Stators 1 gleichsinnig orientiert sind. Da zudem die Magnetisierung des Eisenkerns 8 im Bereich der beiden inneren Segmente 4 des Stators 1 axial nicht nennenswert variiert, wird durch die Wechselwirkung des magnetisierten Eisenkerns 8 mit den Permanentmagneten 5 der beiden inneren Segmente 4 keine Kraft in Axialrichtung erzeugt. Dies bedeutet, daß die in den Fig. 1 und 2 dargestellte Anordnung der Permanentmagnete 5 der beiden inneren Segmente 4 des Stators 1 eine gezielte rotatorische Anregung des Läufers 2 ermöglichet.

Fig. 3 zeigt das in Fig. 1 dargestellte Ausführungsbeispiel des erfindungsgemäßen Elektromotors in einer schematischen Schnittdarstellung, wobei der Schnitt durch eines der äußeren Segmente 3, 5 des Stators 1 verläuft. Die Darstellung bezieht sich auf denselben Zeitpunkt wie in Fig. 2. Im Gegensatz zu den inneren Segmenten 4 des Stators 1 sind in den beiden äußeren Segmenten 3, 5 im Bereich der radialen Fortsätze 10 des Eisenkerns 8 je zwei Permanentmagnete 5 mit gleicher Polung in Umfangsrichtung benachbart zueinander angeordnet. Dies hat zur Folge, daß aus der Wechselwirkung zwischen dem magnetisierten Eisenkern 8 und den Permanentmagneten 5 der beiden äußeren Segmente 3, 5 des Stators 1 kein Drehmoment resultiert. Weiterhin sind die Permanentmagnete 5 in diametral gegenüberliegenden Umfangsbereichen entgegengesetzt gepolt, so daß sich die auf den Läufer 2 wirkenden Radialkräfte jeweils aufheben. Wie aus Fig. 1 hervorgeht sind die einander entsprechenden Permanentmagnete 5 der beiden äußeren Segmente 4 des Stators 1 jeweils relativ zueinander entgegengesetzt gepolt. Dies führt zu dem in Fig. 1 dargestellten Zeitpunkt zu einer anziehenden Wirkung zwischen dem magnetisierten Eisenkern 8 und den Permanentmagneten 5 des linken Segments 4 und zu einer abstoßenden Wirkung zwischen dem magnetisierten Eisenkern 8 und den Permanentmagneten 5 des rechten Segments 4. Die damit einhergehenden Axialkräfte erzeugen eine nach links gerichtete Axialbewegung des Läufers 2 relativ zum Stator 1. Eine Umkehr des Stromflusses durch die Spule 9 führt zu einer Umpolung des magnetisierten Eisenkerns 8 und damit zu einer Umkehr der Bewegungsrichtung des Läufers 2. Die beiden äußeren Segmente 3, 5 des Stators 1 ermöglichen somit eine gezielte Anregung einer axialen Schwingungsbewegung.

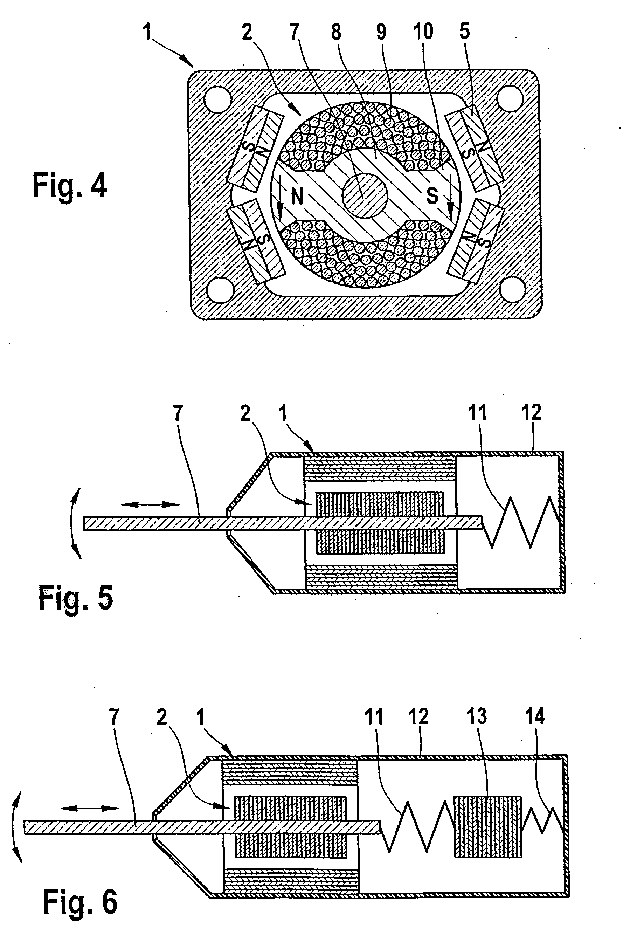

Neben der axialen Schwingungsbewegung kann auch eine radiale Schwingungsbewegung des Läufers 2 erzeugt werden. Hierfür ist eine wiederum andersartige Anordnung der Permanentmagnete 5 erforderlich. Ein Ausführungsbeispiel für eine Anordnung der Permanentmagnete 5 zur Erzeugung einer radialen Schwingungsbewegung ist in Fig. 4 dargestellt.

Fig. 4 zeigt ein weiteres Ausführungsbeispiel des erfindungsgemäßen Elektromotors in einer schematischen Schnittdarstellung. Der Schnitt verläuft dabei durch ein Segment 4 des Stators 1, das der Erzeugung einer radialen Schwingungsbewegung dient. Derart ausgebildete Segmente 4 können beispielsweise die äußeren Segmente 4 des in Fig. 1 dargestellten Ausführungsbeispiels ersetzen, so daß der Elektromotor eine rotatorische Schwingungsbewegung und eine lineare Schwingungsbewegung in Radialrichtung erzeugen kann. Ebenso ist es auch möglich, eines oder mehrere dieser Segmente 4 an das in Fig. 1 dargestellte Ausführungsbeispiel des Elektromotors anzufügen. Ein derart ausgebildeter Elektromotor könnte dann eine rotatorische Schwingungsbewegung sowie je eine lineare Schwingungsbewegung in Axialrichtung und in Radialrichtung erzeugen.

Das in Fig. 4 dargestellte Segment 4 des Stators 1 zeichnet sich dadurch aus, daß die Permanentmagnete 5 im Bereich der radialen Fortsätze 10 des Eisenkerns 8 mit entgegengesetzter Polung in Umfangsrichtung benachbart zueinander angeordnet sind, wobei die Polung der Permanentmagnete 5 bei beiden radialen Fortsätzen 10 entgegengesetzt zueinander ausgebildet ist. Da die beiden radialen Fortsätze 10 des Eisenkerns 8 zudem entgegengesetzte Magnetpole darstellen, werden durch die Permanentmagnete 5 auf beide radiale Fortsätze 10 magnetische Kräfte in die gleiche Richtung ausgeübt. Die resultierende Kraft hat eine Bewegung des Läufers 2 in Radialrichtung zur Folge. Zu dem in Fig. 4 dargestellten Zeitpunkt ist diese Bewegung vertikal nach unten gerichtet. Bei einer Änderung der Richtung des Stromflusses durch die Spule 9 wird auch die Bewegungsrichtung umgekehrt und erfolgt bei der in Fig. 4 gewählten Darstellung vertikal nach oben.

Der erfindungsgemäße Elektromotor kann Schwingungsbewegungen in mehreren Richtungen ausführen. Wie vorstehend beschrieben, ist es hierzu erforderlich die jeweils erwünschten Schwingungsbewegungen entsprechend anzuregen. Außerdem muß ein schwingungsfähiges System vorliegen. Der erfindungsgemäße Elektromotor ist daher als ein Feder-Masse-System ausgebildet, das auf die gewünschten Schwingungsbewegungen abgestimmt ist. Dies wird im folgenden anhand der Fig. 5 bis 10 näher erläutert.

Fig. 5 zeigt eine schematische Darstellung einer möglichen Ausbildung des Feder-Masse-Systems für das in den Fig. 1, 2 und 3 dargestellte Ausführungsbeispiel des erfindungsgemäßen Elektromotors. Der Läufer 2 stellt eine schwingungsfähige Masse dar, die über eine Feder 11 mit einem Gehäuse 12 gekoppelt ist, an dem der Stator 1 befestigt ist. Die Feder 11 ist beispielsweise als Schraubenfeder ausgebildet und wirkt sowohl als lineares Federelement als auch als Torsionsfederelement. Der Läufer 2 kann somit sowohl eine lineare Schwingungsbewegung in Axialrichtung als auch eine rotatorische Schwingungsbewegung ausführen, wobei die Resonanzfrequenz der jeweiligen Schwingungsart von der Masse des Läufers 2 und der linearen Federkonstante der Feder 11 bzw. vom Trägheitsmoment des Läufers 2 und der rotatorischen Federkonstante der Feder 11 abhängt. Die Dimensionierung erfolgt dabei so, daß die Resonanzfrequenzen für die beiden Schwingungsarten des Läufers 2 unterschiedlich sind. Dadurch ist es möglich, die beiden Schwingungsarten individuell zu steuern. Hierzu kann der Spule 9 beispielsweise ein Stromsignal zugeführt werden, dessen Frequenz zwischen den Resonanzfrequenzen für die beiden Schwingungsarten liegt, um beide Schwingungsarten anzuregen. Ebenso kann auch nur im wesentlichen eine Schwingungsart angeregt werden, wenn die Frequenz des Stromsignals mit der Resonanzfrequenz für diese Schwingungsart übereinstimmt. Weiterhin ist es auch möglich, die beiden Schwingungsarten mit unterschiedlichen Frequenzen anzuregen, indem man der Spule 9 ein Stromsignal mit mehreren Frequenzanteilen zuführt, die jeweils einer Resonanzfrequenz entsprechen. Über eine Gewichtung der einzelnen Frequenzanteile können die Schwingungsarten unterschiedlich stark angeregt werden. Die separate Anregung der einzelnen Schwingungsarten wird bei der Verwendung einer gemeinsamen Feder 11 für beide Schwingungsarten zwar geringfügig gestört, da es durch die Feder 11 in einem geringen Maß zu einer Umwandlung der linearen Schwingungsbewegung in eine rotatorische Schwingungsbewegung und umgekehrt kommt. Der wesentliche Beitrag zur Erzeugung der linearen Schwingungsbewegung und der rotatorischen Schwingungsbewegung wird im Rahmen der Erfindung allerdings durch die bei den Fig. 1, 2 und 3 beschriebene magnetische Wechselwirkung zwischen dem magnetisierten Eisenkern 8 des Läufers 2 und den Permanentmagneten 5 des jeweiligen Segments 4 des Stators 1 geleistet.

Fig. 6 zeigt eine schematische Darstellung einer Abwandlung des Feder-Masse-Systems. Verglichen mit der in Fig. 5 dargestellten Ausbildung des Feder-Masse-Systems sind zusätzlich eine Ausgleichsmasse 13 und eine Feder 14 vorhanden, die miteinander verbunden und zwischen der Feder 11 und dem Gehäuse 12 angeordnet sind. Die Ausgleichsmasse 13 dient dazu, Vibrationen des Gehäuses 12 zu reduzieren und schwingt gegenphasig zum Läufer 2. Die Feder 14 wird deutlich schwächer ausgelegt als die Feder 11, um eine Übertragung der Schwingungsbewegungen auf das Gehäuse 12 möglichst gering zu halten. Optional kann eine dritte Feder zwischen Welle 7 und Gehäuse 1 eingefügt werden. Bei entsprechender Auslegung der Federn wird dann bei entgegengesetzten Schwingungen von Welle 7 und Masse 13 keine Vibration auf das Gehäuse übertragen.

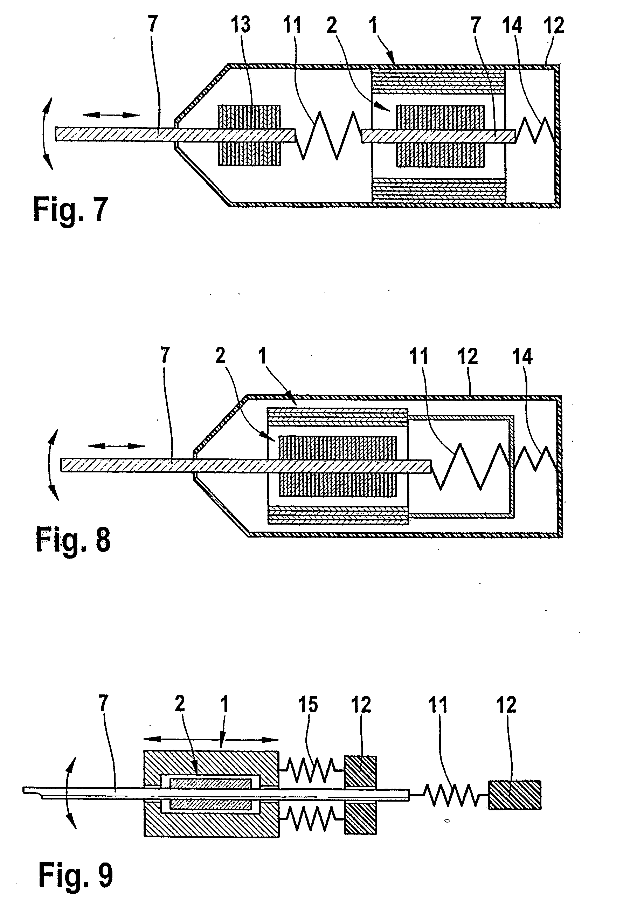

Fig. 7 zeigt eine schematische Darstellung einer weiteren Abwandlung des Feder-Masse-Systems. Bei dieser Ausbildung des Feder-Masse-Systems ist die Welle 7 axial geteilt, wobei die beiden Teile der Welle 7 durch die Feder 11 gekoppelt sind. Auf dem in der Darstellung der Fig. 7 links abgebildeten Teil der Welle 7, der eine figürlich nicht dargestellte Aufsteckzahnbürste aufnimmt, ist die Ausgleichsmasse 13 angeordnet. Der andere Teil der Welle 7 ist Bestandteil des Läufers 2 und über die Feder 14 am Gehäuse 12 aufgehängt. Die beiden Teile der Welle 7 führen einander gegenphasige lineare und rotatorische Schwingungen aus. Dabei verhalten sich die Schwingungsamplituden der beiden Teile der Welle 7 zueinander umgekehrt wie die jeweils zugehörigen Massen bzw. Trägheitsmomente. Somit läßt sich auf diese Weise eine Unter- bzw. Übersetzung der mit dem erfindungsgemäßen Elektromotor erzeugten Antriebsbewegung ohne mechanisches Getriebe realisieren.

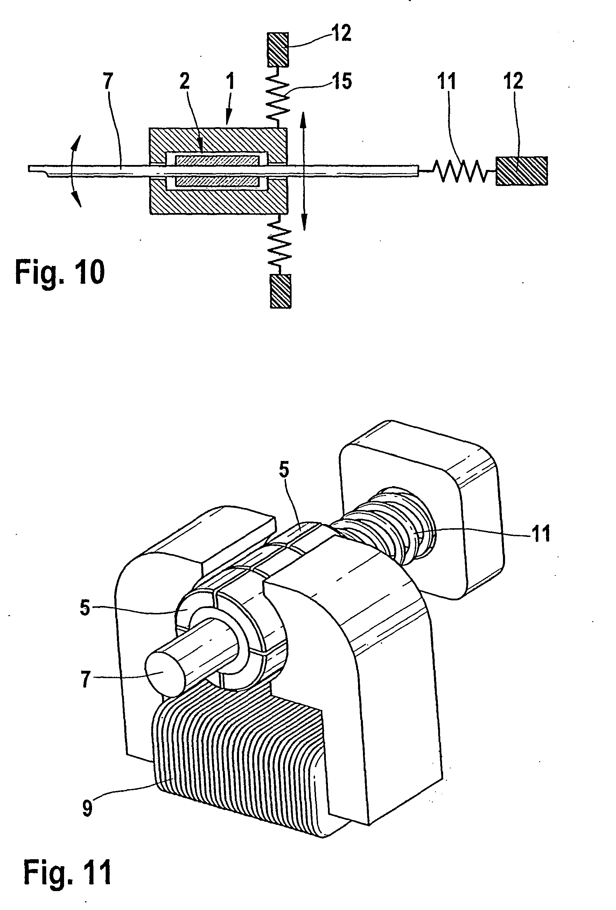

Fig. 8 zeigt eine schematische Darstellung einer nochmaligen Abwandlung des Feder-Masse-Systems. Die Besonderheit dieser Abwandlung besteht darin, daß der Stator 1 nicht fest mit dem Gehäuse 12 verbunden ist, sondern über die Feder 14 elastisch am Gehäuse 12 aufgehängt und somit beweglich ist. Über die Feder 11 sind der Stator 1 und der Läufer 2 miteinander gekoppelt. Diese Geometrie hat zur Folge, daß der Stator 1 gegenphasig zum Läufer 2 schwingt und dadurch das Entstehen von Gehäusevibrationen auch ohne Ausgleichmasse 13 weitgehend unterdrückt werden kann. Weiterhin besteht prinzipiell die Möglichkeit, die Bewegung des Stators 1 zu Antriebszwecken zu nutzen. Insbesondere ist es auch möglich, die vom erfindungsgemäßen Elektromotor ausgeführten Schwingungsarten in unterschiedlicher Weise auf den Stator 1 und den Läufer 2 aufzuteilen. Dies wird beispielhaft anhand der Fig. 9 und 10 erläutert.

Fig. 9 zeigt eine schematische Darstellung eines weiteren Ausführungsbeispiels für das Feder-Masse-System. Bei diesem Ausführungsbeispiel führt der Läufer 2 eine rotatorische Schwingungsbewegung und je nach Einspannung der Welle 7 auch eine lineare Schwingungsbewegung in Axialrichtung aus. Der Stator 1 führt eine lineare Schwingungsbewegung in Axialrichtung aus. Um diese Schwingungsbewegungen zu ermöglichen, ist der Stator 1 mit mehreren Federn 15 am Gehäuse 12 aufgehängt, das in Fig. 9 lediglich jeweils im Bereich der Aufhängungspunkte symbolisch angedeutet ist. Dadurch, daß mehrere Federn 15 eingesetzt werden, wird eine nennenswerte rotatorische Auslenkung des Stators 1 verhindert. Eine lineare Schwingungsbewegung des Stators 1 in Axialrichtung unterstützen die Federn 15 hingegen. Die Welle 7 des Läufers 2 ist über die Feder 11 am Gehäuse 12 aufgehängt, die so ausgebildet sein kann, daß sie sowohl rotatorische als auch lineare Schwingungsbewegungen in Axialrichtung unterstützt. In einer Weiterbildung ist die Welle 7 in Axialrichtung eingespannt, so daß keine axiale Schwingungsbewegung des Läufers 2 möglich ist. In diesem Fall führt der Läufer 2 ausschließlich eine rotatorische Schwingungsbewegung aus, so daß am Läufer 2 eine rotatorische und am Stator 1 eine lineare Schwingungsbewegung in Axialrichtung abgegriffen werden kann: Das in Fig. 9 dargestellte Ausführungsbeispiel des Feder-Masse-Systems kann auch so ausgebildet sein, daß die Federn 11 und/oder 15 jeweils nicht am Gehäuse 12, sondern an einer beweglichen Ausgleichsmasse 13 fixiert sind.

Fig. 10 zeigt eine schematische Darstellung eines nochmals andersartigen Ausführungsbeispiels für das Feder-Masse-System. Der Läufer 2 führt bei diesem Ausführungsbeispiel eine rotatorische Schwingungsbewegung aus. Wenn die Welle 7 des Läufers 2 nicht radial eingespannt ist, führt der Läufer 2 zusätzlich eine lineare Schwingungsbewegung in Radialrichtung aus. Über die Feder 11, die zumindest rotatorische Schwingungsbewegungen unterstützt, ist der Läufer 2 elastisch am Gehäuse 12 aufgehängt. Der Stator 1 ist über die Federn 15, die eine Drehbewegung des Stators 1 weitgehend verhindern, in Radialrichtung elastisch am Gehäuse 12 aufgehängt. Das Feder-Masse-System gemäß Fig. 10 kann mit Segmenten 4 des Stators 1 für eine rotatorische Anregung und eine lineare Anregung in Radialrichtung betrieben werden. Bei radial eingespannter Welle 7 steht dann an der Welle 7 eine rotatorische Schwingungsbewegung und am Stator 1 eine lineare Schwingungsbewegung in Radialrichtung zum Antreiben des Elektrogeräts bereit.

Alternativ zu den vorstehend beschriebenen Ausführungsbeispielen können die Permanentmagnete 5 beispielsweise auch Bestandteile des Läufers 2 und die Spule 9 ein Bestandteil des Stators 1 sein. Ein solches Beispiel ist in Abb. 11 dargestellt. Der Aufbau kann grundsätzlich dem von elektronisch kommutierten Gleichstrommotoren entsprechen. Der Unterschied besteht in der Anordnung des bzw. der Magneten. Weiterhin besteht die Möglichkeit, die Spule 9 jeweils aus mehreren Einzelspulen zusammenzuschalten, die gemeinsam angesteuert werden. Mehrere elektrisch miteinander verbundene Einzelspulen werden im Rahmen der Erfindung als eine gemeinsame Spule 9 behandelt.

Die in den Fig. dargestellten Ausführungsbeispiele des erfindungsgemäßen Elektromotors sind primär für den Einsatz bei einer elektrischen Zahnbürste vorgesehen, wobei durch die unterschiedlichen Schwingungsarten verschiedene Putzbewegungen realisiert werden können. Der erfindungsgemäße Elektromotor eignet sich jedoch auch für den Einsatz bei anderen elektrischen Kleingeräten, insbesondere bei einem elektrischen Rasierapparat. Abhängig von der vorgesehenen Anwendung kann der Aufbau des erfindungsgemäßen Elektromotors variieren.

## Patentansprüche

1. Elektromotor für ein elektrisches Kleingerät, mit einem Läufer und einem Stator, die als schwingungsfähige Motorkomponenten (1, 2) ausgebildet sind, einer Magnetanordnung (6), die Permanentmagnete (5) aufweist und einer Spule (9) zur Erzeugung eines Magnetfelds, das in Wechselwirkung mit der Magnetanordnung (6) eine Kraft zur Anregung einer linearen Schwingungsbewegung und zur Anregung einer rotatorischen Schwingungsbewegung erzeugt, wobei innerhalb der Spule (9) ein magnetisierbares Material (8) zur jeweils temporären Magnetisierung durch das Magnetfeld der Spule (9) angeordnet ist, und wobei mehrere, jeweils einen Satz von Permanentmagneten (5) aufweisende Funktionssegmente (4) axial nebeneinander angeordnete sind, von welchen in jeweils einem axialen Endbereich angeordnete äußere Funktionssegmente (4) mit einem Satz von Permanentmagneten (5) zur Anregung einer linearen Schwingungsbewegung vorgesehen sind, **dadurch gekennzeichnet, daß** wenigstens ein axial zwischen zwei äußeren Funktionssegmenten (4) angeordnetes inneres Funktionssegment (4) mit einem Satz von Permanentmagneten (5) zur Anregung einer rotatorischen Schwingungsbewegung vorgesehen ist.

2. Elektromotor nach Anspruch 1, **dadurch gekennzeichnet, daß** die lineare Schwingungsbewegung parallel und/oder senkrecht zur Drehachse der rotatorischen Schwingungsbewegung orientiert ist.

3. Elektromotor nach einem der vorhergehenden Ansprüche, **dadurch gekennzeichnet, daß** dieselbe Motorkomponente (2) mehrere unterschiedliche Schwingungsbewegungen ausführt.

4. Elektromotor nach einem der vorhergehenden Ansprüche, **dadurch gekennzeichnet, daß** mehrere Motorkomponenten (1, 2) je wenigstens eine Schwingungsbewegung ausführen.

5. Elektromotor nach Anspruch 4, **dadurch gekennzeichnet, daß** die Motorkomponenten (1, 2) unterschiedliche Schwingungsbewegungen ausführen.

6. Elektromotor nach einem der Ansprüche 4 oder 5, **dadurch gekennzeichnet, daß** eine Motorkomponente (1) eine lineare Schwingungsbewegung und eine weitere Motorkomponente (2) eine rotatorische Schwingungsbewegung ausführt.

7. Elektromotor nach einem der vorhergehenden Ansprüche, **dadurch gekennzeichnet, daß** von je einem Satz von Permanentmagneten (5) je eine Art von Schwingungsbewegungen angeregt wird.

8. Elektromotor nach einem der vorhergehenden Ansprüche, **dadurch gekennzeichnet, daß** die schwingungsfähigen Motorkomponenten (1, 2) zueinander gegenphasige Schwingungsbewegungen ausführen.

9. Elektromotor nach einem der vorhergehenden Ansprüche, **dadurch gekennzeichnet, daß** wenigstens eine Ausgleichsmasse (13) vorgesehen ist, die über wenigstens ein elastisches Element (11) mit einer schwingungsfähigen Motorkomponente gekoppelt ist.

10. Elektromotor nach Anspruch 10, **dadurch gekennzeichnet, daß** die Ausgleichsmasse (13) gegenphasig zur zugehörigen schwingungsfähigen Motorkomponente (1, 2) schwingt.

11. Elektromotor nach einem der vorhergehenden Ansprüche, **dadurch gekennzeichnet, daß** mehrere schwingungsfähige Motorkomponenten (1, 2) mit unterschiedlichen Resonanzfrequenzen vorgesehen sind.

12. Elektromotor nach einem der vorhergehenden Ansprüche, **dadurch gekennzeichnet, daß** die Bewegung wenigstens einer schwingungsfähigen Motorkomponente (2) über ein elastisches Element (11) abgreifbar ist.

13. Elektrisches Kleingerät mit einem Elektromotor, **dadurch gekennzeichnet, daß** der Elektromotor gemäß einem der vorhergehenden Ansprüche ausgebildet ist.

14. Elektrisches Kleingerät nach Anspruch 13, **dadurch gekennzeichnet, daß** es als eine elektrische Zahnbürste ausgebildet ist.

15. Elektrisches Kleingerät nach Anspruch 13, **dadurch gekennzeichnet, daß** es als ein elektrischer Rasierapparat ausgebildet ist.

## Claims

1. An electric motor for a small-scale electrical appliance, with a rotor and a stator constructed as oscillatory motor components (1, 2), a magnet arrangement (6) including permanent magnets (5), and a coil (9) for generating a magnetic field which, in interaction with the magnet arrangement (6), generates a force for excitation of an oscillatory linear motion and for excitation of an oscillatory rotational motion, with a magnetizable material (8) being provided within the coil (9) for temporary magnetization by the magnetic field of the coil (9), and a plurality of functional segments (4), each of which includes one set of permanent magnets (5), being arranged axially side-by-side, whereof outer functional segments (4) provided in each axial end section are provided with one set of permanent magnets (5) for excitation of an oscillatory linear motion, **characterized in that** at least one inner functional segment (4) arranged axially between two outer functional segments (4) is provided with one set of permanent magnets (5) for excitation of an oscillatory rotational motion.

2. The electric motor according to claim 1, **characterized in that** the oscillatory linear motion is orientated parallel and/or perpendicular to the axis of rotation of the oscillatory rotational motion.

3. The electric motor according to any one of the preceding claims, **characterized in that** the same motor component (2) performs a plurality of different oscillatory motions.

4. The electric motor according to any one of the preceding claims, **characterized in that** each of the plurality of motor components (1, 2) performs at least one oscillatory motion.

5. The electric motor according to claim 4, **characterized in that** the motor components (1, 2) perform different oscillatory motions.

6. The electric motor according to any one of the claims 4 or 5, **characterized in that** one motor component (1) performs a linear oscillation and another motor component (2) performs a rotational oscillation.

7. The electric motor according to any one of the preceding claims, **characterized in that** each set of permanent magnets (5) excites one type of oscillatory motion each.

8. The electric motor according to any one of the preceding claims, **characterized in that** the oscillatory motor components (1, 2) execute oscillatory motions in phase opposition to each other.

9. The electric motor according to any one of the preceding claims, **characterized in that** at least one balancing weight (13) is provided which is coupled by means of at least one elastic element (11) to an oscillatory motor component.

10. The electric motor according to claim 10, **characterized in that** the balancing weight (13) oscillates in phase opposition to the associated oscillatory motor component (1, 2).

11. The electric motor according to any one of the preceding claims, **characterized in that** a plurality of oscillatory motor components (1, 2) are provided with different resonant frequencies.

12. The electric motor according to any one of the preceding claims, **characterized in that** the motion of at least one oscillatory motor component (2) is adapted to be picked off by means of an elastic element (11).

13. A small-scale electrical appliance with an electric motor, **characterized in that** said electric motor is constructed in accordance with any one of the preceding claims.

14. The small-scale electrical appliance according to claim 13, **characterized in that** it is constructed as an electric toothbrush.

15. The small-scale electrical appliance according to claim 13, **characterized in that** it is constructed as an electric shaving apparatus.

## Revendications

1. Moteur électrique pour un petit appareil électrique, comportant un rotor et un stator, qui sont configurés comme des composants de moteur (1,2) oscillants, un ensemble d'aimant (6), qui présente des aimants permanents (5) et une bobine (9) pour générer un champ magnétique, lequel produit en alternance avec l'ensemble d'aimant (6) une force pour exciter un mouvement d'oscillation linéaire et pour exciter un mouvement d'oscillation rotatif, moyennant quoi à l'intérieur de la bobine (9), un matériau magnétisable (8) à magnétiser respectivement temporairement par l'intermédiaire du champ magnétique de la bobine (9) est disposé et moyennant quoi plusieurs segments fonctionnels (4), présentant respectivement un jeu d'aimants permanents (5) sont disposés axialement côté à côté, parmi lesquels des segments fonctionnels (4) externes disposés dans respectivement une région d'extrémité axiale (5) sont pourvus d'un jeu d'aimants permanents (5) pour exciter un mouvement d'oscillation linéaire, **caractérisé en ce que** au moins un segment fonctionnel (4) interne disposé axialement entre deux segments fonctionnels externes (4) est pourvu d'un jeu d'aimants permanents (5) pour exciter un mouvement d'oscillation rotatif.

2. Moteur électrique selon la revendication 1, **caractérisé en ce que** le mouvement d'oscillation linéaire est orienté parallèlement et/ou perpendiculairement à l'axe de rotation du mouvement d'oscillation rotatif.

3. Moteur électrique selon une des revendications précédentes, **caractérisé en ce que** le même composant de moteur (2) exécute plusieurs mouvements d'oscillation différents.

4. Moteur électrique selon une des revendications précédentes, **caractérisé en ce que** plusieurs composants de moteur (1,2) exécutent chacun au moins un mouvement d'oscillation.

5. Moteur électrique selon la revendication 4, **caractérisé en ce que** les composants de moteur (1,2) exécutent des mouvements d'oscillation différents.

6. Moteur électrique selon une des revendications 4 ou 5, **caractérisé en ce que** un composant de moteur (1) exécute un mouvement d'oscillation linéaire et un autre composant de moteur (2) exécute un mouvement d'oscillation rotatif.

7. Moteur électrique selon une des revendications précédentes, **caractérisé en ce que** un type respectif de mouvement d'oscillation est excité par un jeu respectif d'aimants permanents (5).

8. Moteur électrique selon une des revendications précédentes, **caractérisé en ce que** les composants de moteur oscillants (1,2) exécutent des mouvements d'oscillation en opposition de phase l'un par rapport à l'autre.

9. Moteur électrique selon une des revendications précédentes, **caractérisé en ce que** au moins une masse d'équilibrage (13) est prévue, qui est couplée par l'intermédiaire d'au moins un élément élastique (11) à un composant de moteur oscillant.

10. Moteur électrique selon la revendication 10, **caractérisé en ce que** la masse d'équilibrage (13) oscille en opposition de phase par rapport au composant de moteur (1,2) oscillant afférent.

11. Moteur électrique selon une des revendications précédentes, **caractérisé en ce que** plusieurs composants de moteur oscillants (1,2) sont prévus avec des fréquences de résonance différentes.

12. Moteur électrique selon une des revendications précédentes, **caractérisé en ce que** le mouvement d'au moins un composant de moteur (2) oscillant peut être récupéré par un élément élastique (11).

13. Petit appareil électrique comportant un moteur électrique, **caractérisé en ce que** le moteur électrique est configuré selon une des revendications précédentes.

14. Petit appareil électrique selon la revendication 13, **caractérisé en ce que** il est configuré comme une brosse à dents électrique.

15. Petit appareil électrique selon la revendication 13, **caractérisé en ce que** il est configuré comme un appareil de rasage électrique.
